# EUROPEAN PATENT APPLICATION

(11) **EP 4 714 769 A1**
(43) Date of publication of application: **25.03.2026**
(21) Application number: 23942907.9
(22) Date of filing: 29.06.2023
(51) Int. Cl.: B60W 40/06, B60W 50/06, B60W 30/02

(54) **VEHICLE CONTROL METHOD AND APPARATUS, AND ELECTRONIC DEVICE AND STORAGE MEDIUM**

(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: SHEN, Keqing, Ningbo, Zhejiang 315336 (CN); ZHU, Kunlun, Ningbo, Zhejiang 315336 (CN); CHEN, Dong, Ningbo, Zhejiang 315336 (CN); DONG, Qiao, Ningbo, Zhejiang 315336 (CN); MA, Yingguo, Ningbo, Zhejiang 315336 (CN); CHEN, Qimiao, Ningbo, Zhejiang 315336 (CN)
(74) Representative: Michalski Hüttermann & Partner Patentanwälte mbB
(86) International application number: PCT/CN2023/104279
(87) International publication number: WO 2025/000399

(57) **Abstract**

A vehicle control method and apparatus (100), an electronic device (110), and a storage medium relate to the field of vehicle control technologies. The method includes: obtaining a road surface coefficient of a road on which a vehicle (101) is traveling according to speed parameters of the vehicle (101) during traveling, wherein the road surface coefficient represents a flatness degree of a road surface; determining whether the vehicle (101) is currently traveling on a bumpy road according to the road surface coefficient; in response to determining that the vehicle (101) is currently traveling on a bumpy road, determining at least one bump level covered by the bumpy road; and controlling operation of the vehicle (101) according to the at least one bump level. By identifying the bump level of the road surface according to the speed parameter of the vehicle (101), it is simple and convenient. The control parameter of the vehicle (101) is adjusted based on the identified road surface bump level, so that the control parameter of the vehicle (101) matches the road surface bump level, thereby improving the running stability of the vehicle (101), and further improving the driving or riding experience of the users.

## Description

### TECHNICAL FIELD

The present disclosure relates to the field of vehicle control technologies, in particular, to a vehicle control method and apparatus, an electronic device, and a storage medium.

### BACKGROUND

A vehicle traveling on a bumpy road behaves differently from one on a flat road, and traveling on a bumpy road impacts both the vehicle and a driver. In the relevant art, the identification of the bumpy road is not accurate, and there is no adaptive driving mode specifically designed for the bumpy road, so that the vehicle applies the same control strategy on the bumpy road as on the flat road, leading to poor vehicle operation stability and a degraded driving or riding experience for users.

### SUMMARY

Embodiments of the present disclosure provide a vehicle control method and apparatus, an electronic device, and a storage medium, to improve the vehicle operation stability, thereby improving driving or riding experience for users.

According to a first aspect, the embodiments of the present disclosure provide a vehicle control method, including:
obtaining a road surface coefficient of a road on which a vehicle is traveling according to speed parameters of the vehicle during traveling, wherein the road surface coefficient represents a flatness degree of a road surface;
determining whether the vehicle is currently traveling on a bumpy road according to the road surface coefficient;
in response to determining that the vehicle is currently traveling on a bumpy road, determining at least one bump level covered by the bumpy road; and
controlling operation of the vehicle according to the at least one bump level.

In some embodiments, controlling the operation of the vehicle according to the at least one bump level includes:
monitoring at least one of traveling duration and/or a number of bumps during the vehicle on the bumpy road;
determining whether to adjust an operating parameter of the vehicle according to the traveling duration and/or the number of the bumps and the at least one bump level; and
in response to determining to adjust the operating parameter of the vehicle, determining a target bump level from the at least one bump level; and
adjusting the operating parameter of the vehicle according to the target bump level.

In some embodiments, determining whether to adjust the operating parameter of the vehicle according to the traveling duration and/or the number of the bumps and the at least one bump level includes:
determining whether the traveling duration is greater than a duration threshold of a corresponding to a bump level, and/or determining whether the number of the bumps is greater than a number threshold of the corresponding bump level; and
in response to determining that any one condition of the at least one bump level is met, determining to adjust the operating parameter of the vehicle.

In some embodiments, obtaining the road surface coefficient of the road on which the vehicle is traveling according to the speed parameters of the vehicle during traveling includes:
for each of N periods, obtaining an average value of fluctuation values of the speed parameters of the vehicle in the period;
for each of N periods, obtaining a weight value corresponding to the average values of the fluctuation values of the period; and
determining an average value of M weight values from N weight values as the road surface coefficient, wherein M is determined according to N.

In some embodiments, for each of N periods, obtaining the average value of the fluctuation values of the speed parameters of the vehicle in the period includes:
for any one of the N periods, inputting speed parameters at time points in the period into a filter to obtain fluctuation values of the speed parameters at the time points respectively;
calculating an average value after determining absolute values of the fluctuation values, to obtain the average value of the fluctuation values.

In some embodiments, the speed parameters include at least one kind of a motor speed, a vehicle speed, an axle speed, or a wheel speed of the vehicle.

In some embodiments, the method further includes:
receiving first configuration information; and
enabling or disabling a bumpy road detection function according to the first configuration information;
and/or,
receiving second configuration information; and
adjusting a duration threshold and/or a number threshold of the at least one bump level according to the second configuration information.

According to a second aspect, the embodiments of the present disclosure provide a vehicle control apparatus, including:
an obtaining module, configured to obtain a road surface coefficient of a road on which a vehicle is traveling according to speed parameters of the vehicle during traveling, wherein the road surface coefficient represents a flatness degree of a road surface;
a first determining module, configured to determine whether the vehicle is currently traveling on a bumpy road according to the road surface coefficient;
a second determining module, configured to, in response to determining that the vehicle is currently traveling on a bumpy road, determine at least one bump level covered by the bumpy road; and
a control module, configured to control operation of the vehicle according to the at least one bump level.

According to a third aspect, the present disclosure provides an electronic device, including a memory and a processor.

The memory is configured to store computer instructions; and the processor is configured to execute the computer instructions stored in the memory to implement the method according to any one of the first aspect.

According to a fourth aspect, the present disclosure provides a computer-readable storage medium, storing a computer program, where the computer program is executed by a processor to implement the method according to any one of the first aspect.

According to a fifth aspect, the present disclosure provides a computer program product, including a computer program, where when the computer program is executed by a processor, the method according to any one of the first aspect is implemented.

Embodiments of the present disclosure provide a vehicle control method and apparatus, an electronic device, and a storage medium, including: obtaining a road surface coefficient of a road on which a vehicle is traveling according to speed parameters of the vehicle during traveling, wherein the road surface coefficient represents a flatness degree of a road surface; determining whether the vehicle is currently traveling on a bumpy road according to the road surface coefficient; in response to determining that the vehicle is currently traveling on a bumpy road, determining at least one bump level covered by the bumpy road; and controlling operation of the vehicle according to the at least one bump level. By identifying the bump level of the road surface according to the speed parameter of the vehicle, it is simple and convenient. The control parameter of the vehicle is adjusted based on the identified road surface bump level, so that the control parameter of the vehicle matches the road surface bump level, thereby improving the running stability of the vehicle, and further improving the driving or riding experience of the users.

### BRIEF DESCRIPTION OF DRAWINGS

FIG. 1 is a schematic diagram of a scenario according to some embodiments of the present disclosure.
FIG. 2 is a schematic flowchart 1 of a vehicle control method according to some embodiments of the present disclosure.
FIG. 3 is a schematic flowchart 2 of a vehicle control method according to some embodiments of the present disclosure.
FIG. 4 is a schematic diagram of obtaining a road surface coefficient according to some embodiments of the present disclosure.
FIG. 5 is a schematic diagram of rotational speed fluctuation values of a vehicle on different road surfaces according to some embodiments of the present disclosure.
FIG. 6 is a schematic diagram of a relationship between a rotational speed fluctuation value and a road surface coefficient according to some embodiments of the present disclosure.
FIG. 7 is a schematic diagram of determining a road surface condition flag based on a road surface coefficient according to some embodiments of the present disclosure.
FIG. 8 is a schematic diagram of determining a target road surface condition flag based on a plurality of road surface condition flags according to some embodiments of the present disclosure.
FIG. 9 is a schematic diagram of a relationship between a road surface coefficient and a road surface condition flag according to some embodiments of the present disclosure.
FIG. 10 is a schematic structural diagram of a vehicle control apparatus according to some embodiments of the present disclosure.
FIG. 11 is a schematic structural diagram of an electronic device according to some embodiments of the present disclosure.

### DETAILED DESCRIPTION

To clarify the purpose, technical solutions, and advantages of the embodiments of the present disclosure, the technical solutions in the embodiments of the present disclosure will be clearly and completely described below with reference to the accompanying drawings in the embodiments of the present disclosure, and obviously, the described embodiments are only some but not all of the embodiments of the present disclosure. All other embodiments obtained by a person of ordinary skill in the art based on the embodiments of the present disclosure without creative efforts shall fall within the protection scope of the present disclosure.

In the embodiments of the present disclosure, terms such as "first" and "second" are used to distinguish between same items or similar items that have basically same functions and purposes, and do not limit a sequence thereof. A person skilled in the art may understand that terms such as "first" and "second" do not limit a quantity and an execution sequence, nor do the terms such as "first" and "second" necessarily imply differences between the referenced elements.

It should be noted that, in embodiments of the present disclosure, terms such as "exemplary" or "for example" are used to indicate examples, illustrations, or explanations. Any embodiment or design solution described as the "example" or "for example" in the present disclosure should not be explained as being more preferred or having more advantages than another embodiment or design solution. Exactly, use of the terms such as "example" or "for example" is intended to present a related concept in a specific manner.

A vehicle traveling on a bumpy road behaves differently from one on a flat road, and traveling on a bumpy road impacts both the vehicle and a driver. In the prior art, the identification of the bumpy road is not accurate, and there is no adaptive driving mode specifically designed for the bumpy road, so that the vehicle applies the same control strategy on the bumpy road as on the flat road, leading to the poor vehicle stability.

In the relevant art, the identification of a bumpy road is usually performed by adding sensor(s) to a vehicle, for example, adding sensor(s) such as a gyroscope and/or a camera. On one hand, adding sensor(s) to identify a bumpy road increases costs, and on the other hand, the reliability of identifying a bumpy road by using added sensor(s) is inaccurate. For example, when passing through a speed bump, it is easy to identify the speed bump as a bumpy road.

In view of this, the embodiments of the present disclosure provide a vehicle control method, by processing speed parameters of the vehicle during driving, a road surface coefficient representing a road surface flatness degree is obtained, and a road surface bump level is determined based on the road surface coefficient and traveling duration and/or a number of bumps of the vehicle on the road surface, so that the accuracy of identifying a bumpy road can be improved. The control parameter of the vehicle is adjusted based on the identified road surface bump level, so that the control parameter of the vehicle matches the road surface bump level, thereby improving the running stability of the vehicle, and further improving the driving or riding experience of the users.

The technical solutions of the present disclosure and how the technical solutions of the present disclosure solve the above technical problems are described in detail below with reference to specific embodiments. The following specific embodiments may be implemented independently, or may be combined with each other. For identical or similar concepts or processes, redundant descriptions may be omitted in certain embodiments.

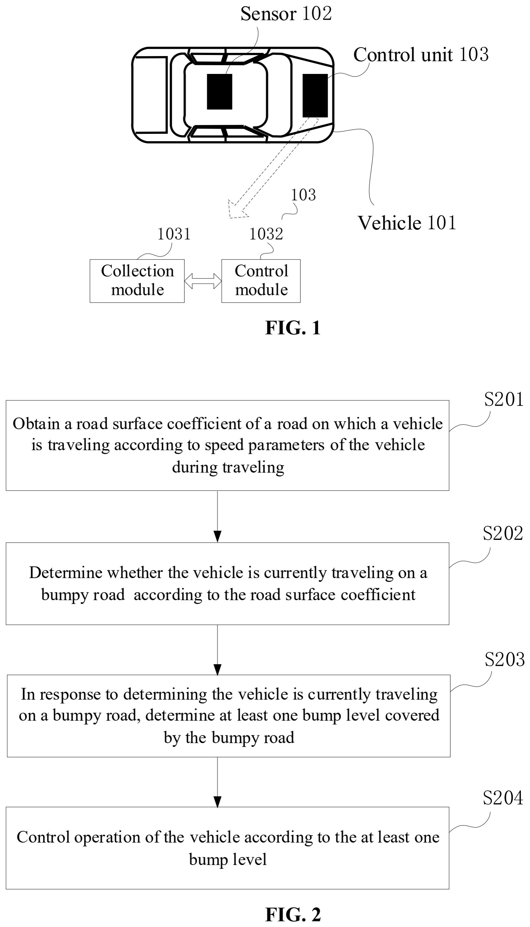

FIG. 1 is a schematic diagram of an application scenario according to some embodiments of the present disclosure, and as shown in FIG. 1, a vehicle 101, a sensor 102, and a control unit 103 are included.

The sensor 102 may be a sensor that is disposed in the vehicle 101 and configured to collect a vehicle speed, and the control unit 103 may identify, based on speed parameters collected by the sensor 102, a bump level of a road surface on which the vehicle 101 is located, and control, based on the identified bump level of the road surface, the vehicle 101 to drive.

For example, the control unit 103 may include a collection module 1031 and a control module 1032, and the collection module 1031 may interact with the sensor 102 to obtain the speed parameters of the vehicle 101 collected by the sensor 102, and send the speed parameters to the control module 1032.

The control module 1032 may determine, when it is determined that the vehicle 101 is traveling on the bumpy road according to the speed parameters, a bump level of the bumpy road, and control, according to the bump level, the vehicle 101 to travel. For example, the operating parameter such as a gear position and a cruise state of the vehicle are adjusted according to the bump level.

The speed parameters may include at least one kind of a motor speed, a vehicle speed, an axle speed, or a wheel speed of the vehicle 101; and correspondingly, the sensor 102 collecting the speed parameters may be a sensor configured to collect a corresponding parameter.

In a possible implementation, the speed parameters may alternatively include a parameter that can represent the driving state of the vehicle, for example, a vehicle acceleration. The speed parameters of the vehicle are not limited in the embodiments of the present disclosure.

The above description provides an overview of the schematic scenario diagram for the embodiments of the present disclosure. Below, taking the control unit in FIG. 1 as an example, the vehicle control method provided by the embodiments of the present disclosure will be introduced.

FIG. 2 is a schematic flowchart of a vehicle control method according to some embodiments of the present disclosure. As shown in FIG. 2, the method includes the following steps.

In S201, a road surface coefficient of a road, on which a vehicle is traveling according to speed parameters of the vehicle during traveling, is obtained, where the road surface coefficient represents a flatness degree of a road surface.

In the embodiments of the present disclosure, the speed parameter may be a parameter related to a vehicle speed, including but not limited to a motor speed, a vehicle speed, an axle speed, a wheel speed, etc. of the vehicle. The speed parameters of the vehicle during traveling may be obtained by interacting with one or more corresponding speed sensor(s).

When obtaining the speed parameter of the vehicle, the control unit may determine the road surface coefficient of the road on which the vehicle is traveling according to fluctuation values corresponding to the speed parameters.

For example, taking the motor speed of the vehicle as an example, after the obtained motor speed is band-pass filtered, corresponding fluctuation values may be obtained, weight values corresponding to the fluctuation values are obtained, and an average value of the weight values obtained in N sampling periods is used as the road surface coefficient. The weight value corresponding to the fluctuation value may be determined according to a preset mapping relationship between the fluctuation value and the weight value. For example, the weight value corresponding to the fluctuation value is queried from a preset data table.

In S202, whether the vehicle is currently traveling on a bumpy road is determined according to the road surface coefficient.

In the embodiments of the present disclosure, the control unit may determine, based on a value of the road surface coefficient, whether the vehicle is currently traveling on the bumpy road.

For example, the control unit may determine whether the vehicle is currently traveling on the bumpy road, by comparing the road surface coefficient with the road surface coefficient threshold. If the road surface coefficient is greater than or equal to the road surface coefficient threshold, it may be determined that the vehicle is currently traveling on the bumpy road.

In a possible implementation, there may be a plurality of road surface coefficient thresholds, and different road surface coefficient thresholds may be used to represent different bump levels of the current road surface, for example, a larger road surface coefficient threshold corresponds to a larger bump level of the road surface. If the road surface coefficient is greater than or equal to any one of the road surface coefficient thresholds, it may be determined that the vehicle is currently traveling on the bumpy road. The road surface coefficient threshold may be determined based on prior knowledge.

In S203, in response to determining that the vehicle is currently traveling on a bumpy road, at least one bump level covered by the bumpy road is determined.

In the embodiments of the present disclosure, different road surface coefficient thresholds may be used to represent different bump levels of the current road surface, that is, each road surface coefficient threshold may correspond to one bump level.

If the road surface coefficient is greater than or equal to any one of the road surface coefficient thresholds, at least one bump level covered by the bumpy road may be determined.

For example, if there are three road surface coefficient thresholds whose values A, B, and C sequentially increase, and if the road surface coefficient X is greater than the road surface coefficient B, it may be determined that the vehicle is currently traveling on a bumpy road, and the bump level covered by the bumpy road includes bump levels corresponding to the road surface coefficient thresholds A and B.

In S204, operation of the vehicle is controlled according to the at least one bump level.

In the embodiments of the present disclosure, when the bump level of the road surface is determined, the operating parameter of the vehicle may be adjusted based on the bump level, for example, the distribution ratio of the front wheel drive or the rear wheel drive is increased, and the operating parameter of the vehicle matches the bump level of the road surface, thereby improving the operating stability of the vehicle.

In a possible implementation, to avoid the impact of a special road condition, for example, a road condition existing such as a speed bump or a discontinuous pothole, on determining the bump level of the road surface, when determining at least one bump level, timing and counting may be performed to determine whether the vehicle is continuously traveling on the bumpy road surface, to eliminate misjudgment caused by the special road condition, thereby improving the vehicle controlling stability.

For example, in response to determining that the vehicle is traveling on a bumpy road surface, timing is started; when the bump level of the road is changed based on the road surface coefficients corresponding to the N times of sampling, whether timing duration is greater than preset duration is determined; and if the timing duration is less than the preset duration, it is may be determined that the bumpy road is relatively short, and will not significantly impact the vehicle operation, without adjusting the operating parameter(s) of the vehicle.

Embodiments of the present disclosure provide a vehicle control method, including: obtaining a road surface coefficient of a road on which a vehicle is traveling according to speed parameters of the vehicle during traveling, wherein the road surface coefficient represents a flatness degree of a road surface; determining whether the vehicle is currently traveling on a bumpy road according to the road surface coefficient; in response to determining that the vehicle is currently traveling on a bumpy road, determining at least one bump level covered by the bumpy road; and controlling operation of the vehicle according to the at least one bump level. By identifying the bump level of the road surface according to the speed parameter of the vehicle, it is simple and convenient. The control parameter of the vehicle is adjusted based on the identified road surface bump level, so that the control parameter of the vehicle matches the road surface bump level, thereby improving the running stability of the vehicle, and further improving the driving or riding experience of the users.

In some embodiments, based on the foregoing embodiment, the vehicle control method provided in the embodiments of the present disclosure may further obtain the road surface coefficient through the following method.

For example, an average value of the fluctuation values of the speed parameters of the vehicle in each of N periods is obtained; a weight value corresponding to the average value of the fluctuation values of the period is obtained; and an average value of M of the weight values is used as the road surface coefficient.

The N periods may be sampling periods for obtaining the road surface coefficient once. After band-pass filtering is applied on the corresponding speed parameters in the N periods, and the average value thereof is calculated, the average value of the fluctuation values in each period may be obtained.

According to the mapping relationship between the average value of the fluctuation values and the weight, the weight value corresponding to the average value of the fluctuation values in each period may be obtained, and the average value corresponding to the weight values is obtained, that is, N weight values are obtained.

From the N weight values, M weight values are selected, and an average value of the M weight values serves as the road surface coefficient. M and N may be the same or different. The road surface coefficient is determined according to the average values of the fluctuation values of the periods, which can improve the accuracy of the identification of the road surface coefficient.

In a possible implementation, each period may include a plurality of time points, and an average value of the fluctuation values corresponding to each period may be determined through the following method.

For example, for any one of the periods, the speed parameters at a plurality of time points in the period are input into a filter to obtain fluctuation values of the speed parameters at the time points respectively; absolute values of the fluctuation values are determined and then an average value is calculated to obtain an average value of the fluctuation values.

The filter may be a band-pass filter. By inputting the speed parameters collected at each time point into a filter, a fluctuation value of each speed parameter output by the filter is obtained, and after an absolute value of the fluctuation value of each speed parameter is determined, an average value is calculated to obtain an average value of the fluctuation values. The average fluctuation value is determined based on the absolute values of the fluctuation values at a plurality of time points in each period, which can improve the calculation accuracy and reduce the probability of abnormal values distorting the average fluctuation value.

In some embodiments, when the at least one bump level covered by the bumpy road is determined based on the road surface coefficient, controlling the vehicle operation according to the at least one bump level may alternatively be implemented through the following method.

For example, at least one of traveling duration and/or a number of bumps of the vehicle on the bumpy road is monitored; whether to adjust the operating parameter of the vehicle is determined according to the traveling duration and/or the number of the bumps and the at least one bump level; in response to determining to adjust the operating parameter of the vehicle, a target bump level is determined from the at least one bump level; and the operating parameter of the vehicle is adjusted according to the target bump level.

When it is determined that the vehicle is on the bumpy road, that is, when the road surface coefficient is greater than the road surface coefficient threshold, the control unit starts timing and counting, to obtain at least one of the traveling duration and/or the number of the bumps of the vehicle on the bumpy road. When it is determined that the vehicle is continuously traveling on the bumpy road according to the obtained traveling duration and/or the number of the bumps, the highest bump level among the at least one bump level covered by the bumpy road is used as the target bump level.

When the target bump level is determined, the current traveling parameter of the vehicle may be adjusted to the target traveling parameter, for example, the target bump level is input into a preset parameter model to obtain the target traveling parameter output by the parameter model, or the target traveling parameter is obtained according to a preset mapping relationship between the target bump level and the target traveling parameter. This is not limited in the embodiments of the present disclosure.

In some embodiments, adjusting the traveling parameter of the vehicle may include changing a state of the vehicle, for example, switching from two-wheel drive to four-wheel drive or switching from four-wheel drive to two-wheel drive; or changing torque distribution between front and rear wheels drives according to the target bump level, for example, increasing a distribution ratio of the front wheel drive or the rear wheel drive; or changing a maximum/minimum torque according to the target bump level, for example, increasing or decreasing the maximum/minimum torque; or changing a feedback level according to the target bump level, for example, increasing or decreasing the feedback level; or changing a gear position of a gearbox according to the target bump level, for example, upshifting or downshifting; or changing an active suspension state according to the target bump level, for example, increasing or decreasing a suspension height, for example, enhancing or weakening a suspension stiffness.

In a possible implementation, adjusting a traveling parameter of the vehicle may include: changing a steering assistance state of the vehicle according to the target bump level, for example, lightening or heavyening the steering feel; changing an electronic differential lock state according to the target bump level, for example, turning on or off an electronic differential lock; changing a cruise/adaptive cruise state according to the target bump level, for example, activating or deactivating the cruise/adaptive cruise, for example, increasing or decreasing a target speed of the cruise/adaptive cruise; changing an assisted driving/unmanned driving state according to the target bump level, for example, exiting assisted driving/unmanned driving, for example, increasing or decreasing a target speed of assisted driving/unmanned driving state; changing sensitivity of the brake system according to the target bump level, for example, weakening or increasing the sensitivity of the brake system; or changing a diagnostic state according to the target bump level, for example, enabling/disabling diagnosis of some components, for example, increasing or decreasing a threshold for diagnosis of some components.

For example, it is determined whether the traveling duration is greater than a duration threshold of a corresponding bump level, and/or it is determined whether the number of the bumps is greater than a number threshold of a corresponding bump level; and when any one of the conditions of at least one bump level is met, it is determined to adjust the operating parameter of the vehicle.

For example, the duration threshold and the number threshold may be determined based on prior knowledge, and duration thresholds and number thresholds corresponding to different bump levels may be the same or may be different.

After timing and/or counting, each time the road surface coefficient is obtained, according to the relationship between the road surface coefficient and each road coefficient threshold, whether the traveling duration is greater than the duration threshold of the corresponding bump level is determined, and/or whether the number of the bumps is greater than the number threshold of the corresponding bump level is determined.

For example, when it is determined for the first time that the bump level includes two bump levels A and B according to the road surface coefficient, timing and counting are started for the two bump levels A and B respectively, if it is determined for the next time that the bump level includes A but does not include B according to the road surface coefficient, the timing for the bump level B ends, the timing for the bump level A continues, and it is determined whether the current traveling duration of each of the two bump levels A and B is greater than the duration threshold of the corresponding bump level, and if it is less than the corresponding duration threshold, enter a next bump level determination. If any one duration is greater than the corresponding duration threshold, it may be determined that the vehicle is continuously traveling on the bumpy road surface.

The counting is similar to the timing, each time the bump level is determined according to the road surface coefficient, if the previous bump level is included, the number of the bumps adds 1, and if the accumulated number of bumps within the preset time period is greater than or equal to the number threshold, it is determined that the vehicle is continuously traveling on the bumpy road surface.

In some embodiments, if the accumulated number of bumps within the preset time period is less than the number threshold, the accumulated number of bumps is cleared. Through the design of the traveling duration, the road condition similar to the speed bump can be eliminated, thereby improving the accuracy of identifying the bump level of the road surface. Through the design of the number of the bumps, when the road condition includes a plurality of discontinuous potholes, it is avoided that the bump level of the road condition cannot be identified because the traveling duration does not reach the preset duration threshold, thereby improving the accuracy of identifying the bump level of the road surface.

In some embodiments, in a possible implementation, enabling and disabling of the bumpy road detection function, and/or a duration threshold and/or a number threshold corresponding to the bump level, may be adjusted based on the configuration information.

For example, first configuration information is received; a function of detecting a bumpy road is enabled or disabled according to the first configuration information; and/or second configuration information is received; and a duration threshold and/or a number threshold of at least one bump level are/is adjusted according to the second configuration information.

The first configuration information and/or the second configuration information may be sent by the user to the control unit through the client terminal.

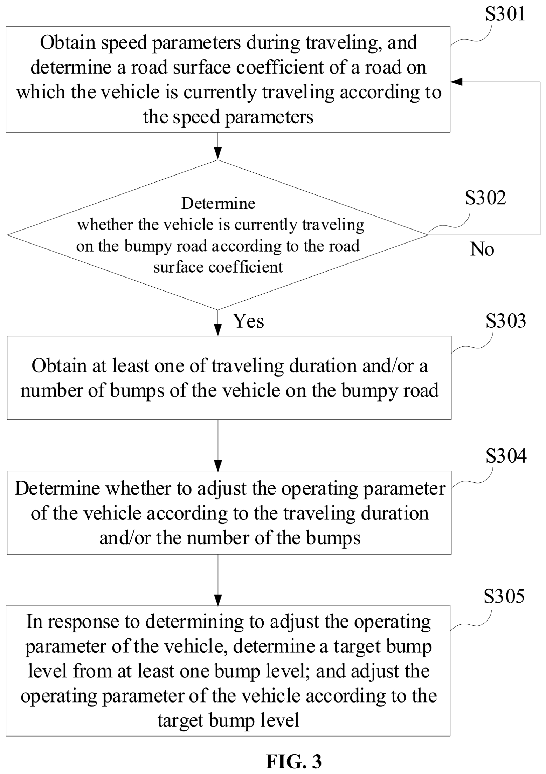

FIG. 3 is a schematic flowchart of another vehicle control method according to some embodiments of the present disclosure. As shown in FIG. 3, the method includes the following steps.

In S301, speed parameters during traveling are obtained, and a road surface coefficient of a road on which the vehicle is currently traveling is determined according to the speed parameters.

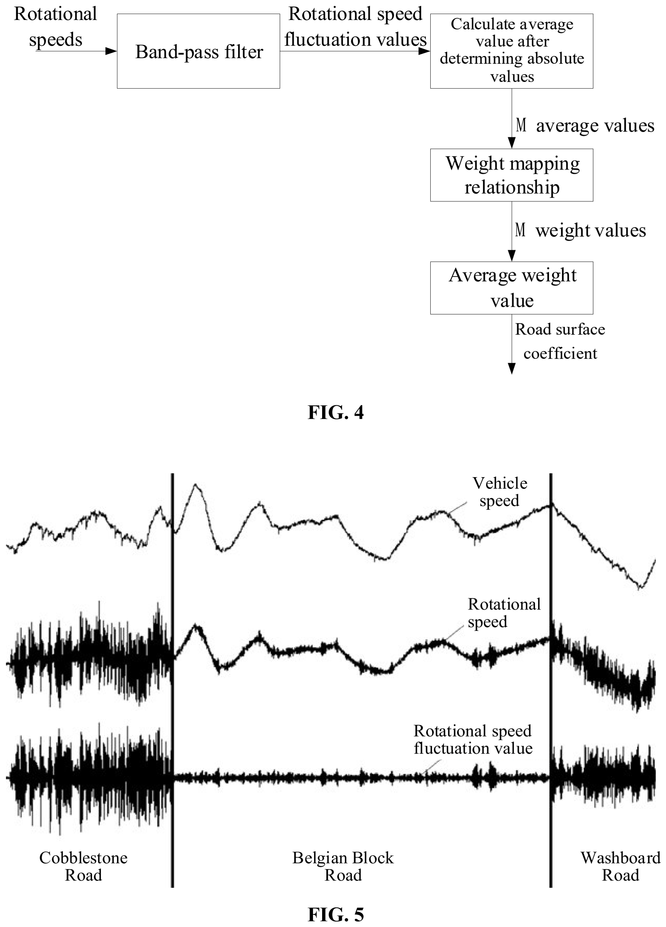

For example, as shown in FIG. 4, taking the speed parameter being the rotational speed as an example, band-pass filtering is applied on the rotational speeds in N periods (each period includes a plurality of rotational speeds) to obtain a plurality of rotational speed fluctuation values in each period, for each period, absolute values of the rotational speed fluctuation values in the period are determined and then an average value is calculated, thereby obtaining N fluctuation average values, N weight values corresponding to the N fluctuation average values are obtained according to the weight mapping relationship, M weight values are selected from the N weight values, and an average value of the M weight values is used as the road surface coefficient. N and M may be the same or different.

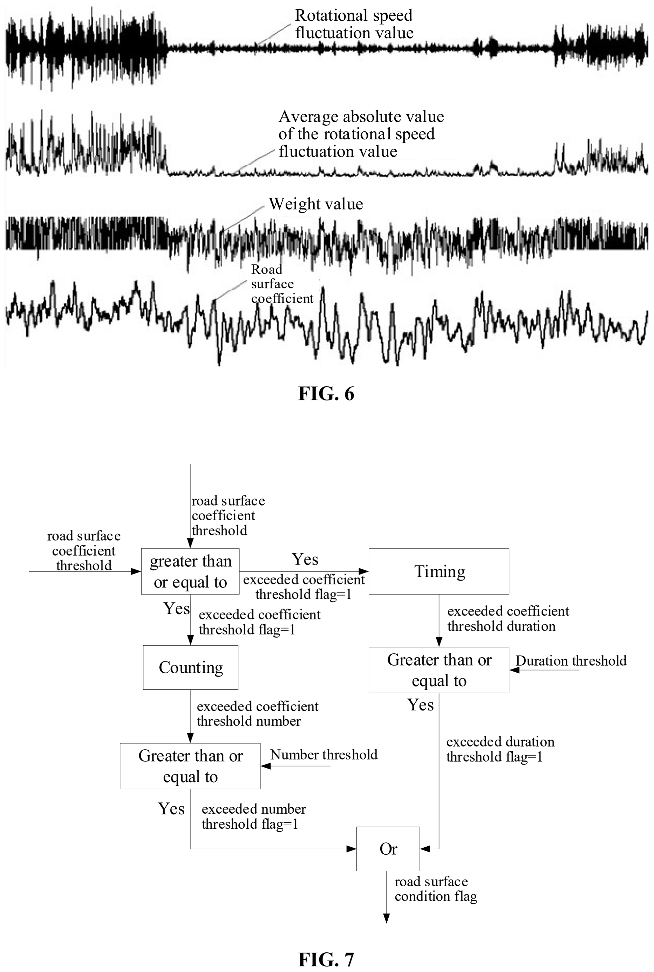

In some embodiments, as shown in FIGs. 5 and 6, when the vehicle travels on different roads, there are correlations between a vehicle speed, a rotational speed, and a rotational speed fluctuation value of the vehicle, and there are correlations between a rotational speed fluctuation amount, an absolute average value of the rotational speed fluctuation amount, a weight value, and a road surface coefficient.

In S302, whether the vehicle is currently traveling on the bumpy road is determined according to a magnitude relationship between the road surface coefficient and a road surface coefficient threshold.

If the road surface coefficient is greater than or equal to the road surface coefficient threshold, the vehicle is currently traveling on the bumpy road, and the step S303 may be executed; or if the road surface coefficient is less than the road surface coefficient threshold, the vehicle isn't currently traveling on the bumpy road, and the process ends, the step S301 is reperformed.

In S303, at least one of traveling duration and/or a number of bumps of the vehicle on the bumpy road is obtained.

In S304, whether to adjust the operating parameter of the vehicle is determined according to the traveling duration and/or the number of the bumps.

In S305, in response to determining to adjust the operating parameter of the vehicle, a target bump level is determined from at least one bump level; and the operating parameter of the vehicle is adjusted according to the target bump level.

For example, referring to FIG. 7, when the road surface coefficient is greater than or equal to the road surface coefficient threshold, the exceeded coefficient threshold flag jumps from 0 to 1. When the exceeded coefficient threshold flag = 1, it may be determined that the vehicle has entered the bumpy road, there may be a plurality of road surface coefficient thresholds, and each road surface coefficient threshold corresponds to one exceeded coefficient threshold flag. Each exceeded coefficient threshold flag corresponds to one bump level. When the road surface coefficient is greater than or equal to the plurality of road surface coefficient thresholds, the exceeded coefficient threshold flags corresponding to the plurality of road surface coefficient thresholds all jump from 0 to 1. The road surface coefficient threshold may be one or more set(s) of values that have a mapping relationship with the rotational speed or vehicle speed. When there are sets of values, that is, a plurality of road surface coefficient thresholds, a relationship between the plurality of road surface coefficient thresholds may be a plurality of thresholds under a same vehicle traveling parameter, or may be a plurality of thresholds under different vehicle traveling parameters, where the traveling parameter may be one or more of a gear position, a suspension stiffness, a suspension height, etc.

When it is determined that the exceeded coefficient threshold flag = 1, at each exceeded coefficient threshold flag, timing and counting are started, to obtain the exceeded coefficient threshold duration, that is, the traveling duration, and the exceeded coefficient threshold number, that is, the number of the bumps. After timing starts, each time the road surface coefficient is obtained, the exceeded coefficient threshold duration and the exceeded coefficient threshold number are updated according to the relationship between the road surface coefficient and the road surface coefficient threshold. A magnitude relationship between the duration threshold and the exceeded coefficient threshold duration corresponding to each current exceeded coefficient threshold flag is determined, as well as a magnitude relationship between the number threshold of and the exceeded coefficient threshold number corresponding to each exceeded coefficient threshold flag.

If there exists an exceeded coefficient threshold duration greater than a duration threshold, the exceeded duration threshold flag is switched from 0 to 1, and if the exceeded coefficient threshold number is greater than the number threshold, the exceeded number threshold flag is switched from 0 to 1. If not, proceed to the detection of next period. The exceeded coefficient threshold flag, the exceeded number threshold flag, and the exceeded coefficient threshold flag correspond one-to-one, and each can be one or multiple, and each flag corresponds to one bump level.

It may be understood that, during each update, the bump level determined based on the road surface coefficient may not include a bump level determined last time, and in a subsequent update, the accumulated exceeded coefficient threshold duration or exceeded coefficient threshold number is cleared.

If there exists an exceeded duration threshold flag jumping from 0 to 1, or an exceeded number threshold flag jumping from 0 to 1, then it is determined that the vehicle's traveling parameter needs to be adjusted.

Based on the exceeded duration threshold flag or the exceeded number threshold flag, at least one road surface condition flag is obtained. The road surface condition flag is used to indicate a bump level of the road surface, and the road surface condition flag is in a one-to-one correspondence with the exceeded duration threshold flag or the exceeded number threshold flag.

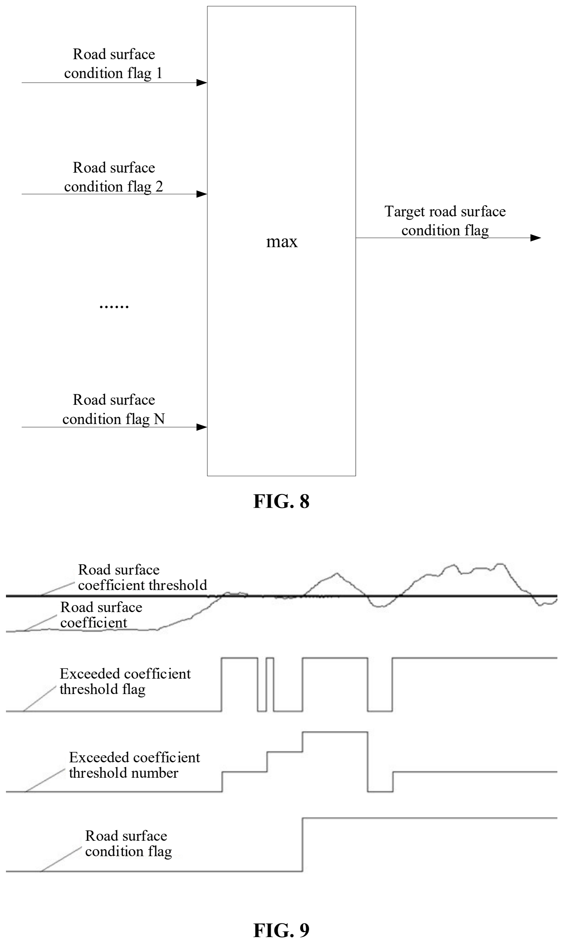

If there are a plurality of road surface condition flags, as shown in FIG. 8, the road surface condition flag representing the highest bump level may serve as the target road surface condition flag, that is, the target bump level is determined from the at least one bump level.

For example, as shown in FIG. 9, there is a corresponding relationship among the road surface coefficient, road surface coefficient threshold, exceeded coefficient threshold flag, exceeded duration threshold flag, exceeded number threshold flag, and road surface condition flag.

When determining the target bump level, the specific implementation of adjusting the vehicle's traveling parameter according to the target bump level is similar to that in the foregoing embodiments and will not be repeated here.

According to the vehicle control method provided in the embodiments of the present disclosure, by setting the traveling duration and the number of the bumps, the probability of impact from special road conditions on the accuracy in identifying a bump level can be reduce, thereby improving stability of vehicle control.

The embodiments of the present disclosure further provide a vehicle control apparatus.

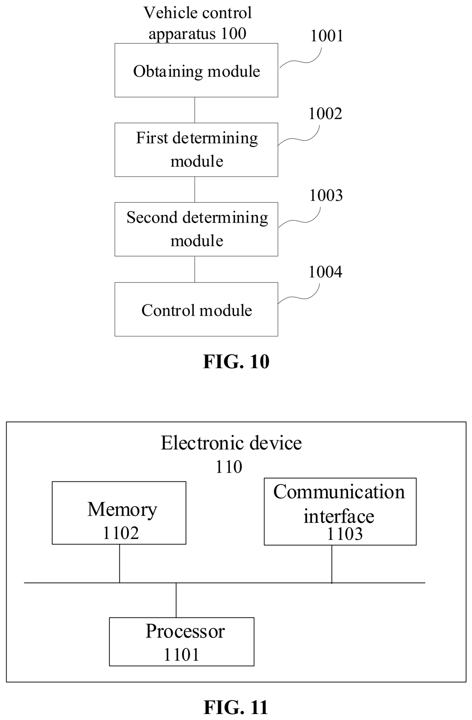

FIG. 10 is a schematic structural diagram of a vehicle control apparatus according to some embodiments of the present disclosure. As shown in FIG. 10, the apparatus includes:
an obtaining module 1001, configured to obtain a road surface coefficient of a road on which a vehicle is traveling according to speed parameters of the vehicle during traveling, wherein the road surface coefficient represents a flatness degree of a road surface;
a first determining module 1002, configured to determine whether the vehicle is currently traveling on a bumpy road according to the road surface coefficient;
a second determining module 1003, configured to, in response to determining that the vehicle is currently traveling on a bumpy road, determine at least one bump level covered by the bumpy road; and
a control module 1004, configured to control operation of the vehicle according to the at least one bump level.

In some embodiments, the control module 1004 is further configured to monitor at least one of traveling duration and/or a number of bumps of the vehicle on the bumpy road; determine, based on the traveling duration and/or the number of the bumps, and the at least one bump level, whether to adjust the operating parameter of the vehicle; in response to determining to adjust the operating parameter of the vehicle, determine a target bump level from the at least one bump level; and adjust the parameter of the vehicle according to the target bump level.

In some embodiments, the control module 1004 is further configured to: determine whether the traveling duration is greater than a duration threshold of a corresponding bump level, and/or determine whether the number of the bumps is greater than a number threshold of a corresponding bump level; and determine to adjust the operating parameter of the vehicle in response to determining that any one condition of at least one bump level is met.

In some embodiments, the obtaining module 1001 is further configured to: for each of N periods, obtain an average value of the fluctuation values of the speed parameters of the vehicle in the period; for each of N periods, obtain a weight value corresponding to the average value of the fluctuation values of the period; and determine an average value of M weight values from N weight values as the road surface coefficient.

In some embodiments, the obtaining module 1001 is further configured to: for any one of the N periods, input the speed parameters at time points in the period into a filter to obtain fluctuation values of the speed parameters at the time points respectively; determine absolute values of the fluctuation values and then calculate an average value to obtain an average value of the fluctuation values.

In some embodiments, the obtaining module 1001 is further configured to: receive first configuration information; enable or disable a function of detecting a bumpy road according to the first configuration information; and/or receive second configuration information; and adjust a duration threshold and/or a number threshold of at least one bump level according to the second configuration information.

The vehicle control apparatus provided in the embodiments of the present disclosure may perform the vehicle control method provided in any one of the foregoing embodiments, and principles and technical effects thereof are similar, and details are not described herein again.

Some embodiments of the present disclosure further provide an electronic device.

FIG. 11 is a schematic structural diagram of an electronic device according to some embodiments of the present disclosure. As shown in FIG. 11, the electronic device 110 may include at least one processor 1101, a memory 1102, and a communication interface 1103.

The memory 1102 is configured to store a program. Specifically, the program may include program code, where the program code includes a computer executable instruction.

Memory 1102 may include high-speed RAM memory and may additionally include nonvolatile memory, such as at least one disk memory.

The processor 1101 is configured to execute the computer-executable instructions stored in the memory 1102 to implement the actions of the vehicle control method described in the foregoing method embodiments. The processor 1101 may be a Central Processing Unit (CPU for short), or an Application Specific Integrated Circuit (ASIC for short), or one or more integrated circuits configured to implement the embodiments of the present disclosure.

In a specific implementation, if the communication interface 1103, the memory 1102, and the processor 1101 are implemented independently, the communication interface 1103, the memory 1102, and the processor 1101 may be connected to each other through a bus and communicate with each other. The bus may be an industry standard architecture (ISA for short) bus, a peripheral component (PCI for short) bus, an extended industry standard architecture (EISA for short) bus, etc. The bus may be classified into an address bus, a data bus, a control bus, etc., but it does not mean that there is only one bus or one type of buses.

In some embodiments, in specific implementation, if the communication interface 1103, the memory 1102, and the processor 1101 are integrated on one chip for implementation, the communication interface 1103, the memory 1102, and the processor 1101 may complete the communication through an internal interface.

Some embodiments of the present disclosure further provide a computer-readable storage medium, storing a computer program, where the computer program, when executed by a processor, implements the technical solutions of the foregoing vehicle control method embodiments, with similar implementation principles and technical effects omitted here.

In a possible implementation, the computer-readable medium may include a random access memory (RAM), a read-only memory (ROM), a compact disc read-only memory (CD-ROM) or another optical disc memory, a magnetic disk memory or another magnetic storage device, or any other medium that is targeted to carry or stores required program code in a form of an instruction or a data structure, and may be accessed by a computer. Additionally, any connection is properly termed a computer-readable medium. For example, if software is transmitted from a website, server, or other remote source using a coaxial cable, a fiber an optic cable, a twisted pair, a digital subscriber line (DSL), or wireless technologies (such as infrared, radio, and microwave), then the coaxial cable, the fiber optic cable, the twisted pair, the DSL, or the wireless technologies such as infrared, radio, and microwave are included in the definition of the medium. Disk and disc, as used herein, includes an optical disc, a laser disc, an optical disc, a digital versatile disc (DVD), a floppy disk and a blu-ray disc, where disks usually reproduce data magnetically, while discs reproduce data optically with lasers. Combinations of the above should also be included within the scope of computer-readable medium.

Some embodiments of the present disclosure further provide a computer program product, including a computer program, where the computer program, when executed by a processor, implements the technical solutions of the foregoing vehicle control method embodiments, with similar implementation principles and technical effects omitted here.

In a specific implementation of the terminal device or the server, it should be understood that the processor may be a central processing unit (CPU), or may be another general-purpose processor, a digital signal processor (DSP), an application specific integrated circuit (ASIC), etc. The general-purpose processor may be a microprocessor, or the processor may be any conventional processor or the like. The steps of the methods disclosed with reference to the embodiments of the present disclosure may be directly performed by a hardware processor, or may be performed by using a combination of hardware and software modules within the processor.

Those skilled in the art may understand that all or part of the steps of any of the above method embodiments may be completed by hardware related to program instructions. The foregoing program may be stored on a computer-readable storage medium, and when the program is executed, all or some steps of the foregoing method embodiments are performed.

If the technical solution of the present disclosure is implemented in software form for sale or use, it may be stored on a computer-readable storage medium. Based on this understanding, all or part of the technical solutions of the present disclosure may be embodied in the form of a software product, and the computer software product is stored in a storage medium, including a computer program or several instructions. The computer software product enables a computer device (which may be a personal computer, a server, a network device, or a similar electronic device) to perform all or some of the steps of the methods described in the embodiments of the present disclosure.

Finally, it should be noted that the above embodiments are only used to illustrate the technical solutions of the present disclosure rather than impose limitations thereon. Although detailed descriptions have been provided for the present disclosure with reference to these embodiments, those of ordinary skill in the art should understand that they may still modify the technical solutions described in the foregoing embodiments, or equivalently replace some or all of the technical features thereof. These modifications or replacements do not make the essence of the corresponding technical solutions depart from the scope of the technical solutions of the embodiments of the present disclosure.

## Claims

1. A vehicle control method, comprising:
obtaining a road surface coefficient of a road on which a vehicle is traveling according to speed parameters of the vehicle during traveling, wherein the road surface coefficient represents a flatness degree of a road surface;
determining whether the vehicle is currently traveling on a bumpy road according to the road surface coefficient;
in response to determining that the vehicle is currently traveling on a bumpy road, determining at least one bump level covered by the bumpy road; and
controlling operation of the vehicle according to the at least one bump level.

2. The method according to claim 1, wherein controlling the operation of the vehicle according to the at least one bump level comprises:
monitoring at least one of traveling duration and/or a number of bumps during the vehicle on the bumpy road;
determining whether to adjust an operating parameter of the vehicle according to the traveling duration and/or the number of the bumps and the at least one bump level; and
in response to determining to adjust the operating parameter of the vehicle, determining a target bump level from the at least one bump level; and
adjusting the operating parameter of the vehicle according to the target bump level.

3. The method according to claim 2, wherein determining whether to adjust the operating parameter of the vehicle according to the traveling duration and/or the number of the bumps, and the at least one bump level comprises:
determining whether the traveling duration is greater than a duration threshold of a corresponding to a bump level, and/or determining whether the number of the bumps is greater than a number threshold of the corresponding bump level; and
in response to determining that any one condition of the at least one bump level is met, determining to adjust the operating parameter of the vehicle.

4. The method according to any one of claims 1 to 3, wherein obtaining the road surface coefficient of the road on which the vehicle is traveling according to the speed parameters of the vehicle during traveling comprises:
for each of N periods, obtaining an average value of fluctuation values of the speed parameters of the vehicle in the period;
for each of N periods, obtaining a weight value corresponding to the average value of the fluctuation values of the period; and
determining an average value of M weight values from N weight values as the road surface coefficient, wherein M is determined according to N.

5. The method according to claim 4, wherein for each of N periods, obtaining the average value of the fluctuation values of the speed parameters of the vehicle in the period comprises:
for any one of the N periods, inputting speed parameters at time points in the period into a filter to obtain fluctuation values of the speed parameters at the time points respectively; and
calculating an average value after determining absolute values of the fluctuation values, to obtain the average value of the fluctuation values.

6. The method according to claim 4, wherein the speed parameters comprise at least one kind of a motor speed, a vehicle speed, an axle speed, or a wheel speed of the vehicle.

7. The method according to claim 3, further comprising:
receiving first configuration information; and
enabling or disabling a bumpy road detection function according to the first configuration information;
and/or,
receiving second configuration information; and
adjusting a duration threshold and/or a number threshold of the at least one bump level according to the second configuration information.

8. A vehicle control apparatus, comprising:
an obtaining module, configured to obtain a road surface coefficient of a road on which a vehicle is traveling according to speed parameters of the vehicle during traveling, wherein the road surface coefficient represents a flatness degree of a road surface;
a first determining module, configured to determine whether the vehicle is currently traveling on a bumpy road according to the road surface coefficient;
a second determining module, configured to, in response to determining that the vehicle is currently traveling on a bumpy road, determine at least one bump level covered by the bumpy road; and
a control module, configured to control operation of the vehicle according to the at least one bump level.

9. An electronic device, comprising:
a memory, configured to store computer programs; and
a processor, configured to execute the computer programs to implement the method according to any one of claims 1 to 7.

10. A computer-readable storage medium, having computer programs stored thereon, wherein, the computer programs are executed by a processor to implement the method according to any one of claims 1 to 7.
